# EUROPÄISCHE PATENTSCHRIFT

(11) **EP 0 598 317 B1**
(45) Veröffentlichungstag und Bekanntmachung des Hinweises auf die Patenterteilung: **13.10.1999**
(21) Anmeldenummer: 93118188.7
(22) Anmeldetag: 10.11.1993
(51) Int. Cl.: H04B 1/64

(54) **Rundfunkempfänger mit automatischer Kompressionsregelung**
Broadcast receiver with automatic compression control
Récepteur de radiodiffusion avec réglage de compression automatique

(30) Priorität: 19.11.1992 DE 4238882
(43) Veröffentlichungstag der Anmeldung: 25.05.1994
(73) Patentinhaber: DEUTSCHE THOMSON-BRANDT GMBH, 78048 Villingen-Schwenningen (DE)
(72) Erfinder: Schröder, Ernst F., D-30655 Hannover (DE); Spille, Jens, D-30880 Laatzen (DE)

(56) Entgegenhaltungen:
- EP-A- 0 402 973
- DE-A- 4 004 576
- GB-A- 2 125 255

## Beschreibung

Die Erfindung geht aus von einem Rundfunkempfänger gemäß dem Oberbegriff des Anspruchs 1. Ein derartiger Rundfunkempfänger ist bekannt durch die DE-OS 40 04 576.

Bei einer Kompression und Expansion eines Audiosignals wird erreicht, daß die Signalamplituden der leisesten Stellen oberhalb des Rauschpegels liegen und die der lautesten Stellen den Aussteuerbereich nicht überschreiten. Es ist dabei bekannt, zusätzlich zum Audiosignal ein Steuersignal zu übertragen, das dem Empfänger eine Information über die Art und die Stärke der senderseitig vorgenommenen Kompression mitteilt. Der Empfänger kann dann entsprechend der senderseitigen Kompression eine Expansion vernehmen, um die Kompression auszugleichen und eine naturgetreue Tonwiedergabe sicherzustellen. Es sind also Mittel notwendig, um senderseitig dem Empfänger mitzuteilen, ob überhaupt eine Kompression stattgefunden hat und welche Art und Stärke die Kompression hat. Dadurch ergibt sich ein zusätzlicher Aufwand. Es ist dabei auch bekannt, in einem Datenstrom z.B. einem RDS-Datenstrom ein Bit zu setzen, das dem Empfänger mitteilt, ob senderseitig eine Dynamik-Kompression durchgeführt wurde.

Der Erfindung liegt die Aufgabe zugrunde, einen Rundfunkempfänger der beschriebenen Art zu schaffen, der das Vorhandensein einer senderseitigen Kompression erkennen kann, jedoch dabei ohne das genannte Vorkomprimierungs-Bit auskommt. Diese Aufgabe wird durch die im Anspruch 1 angegebene Erfindung gelöst. Vorteilhafte Weiterbildungen der Erfindung sind in den Unteransprüchen angegeben.

Ein wesentlicher Vorteil der Erfindung besteht darin, daß auf die Übertragung des Vorkomprimierungs-Bit verzichtet werden kann und somit auf der Sendeseite Kosten und Arbeit eingespart werden. Außerdem werden Fehler durch versehentliches Setzen oder Nichtsetzen des Bit auf der Senderseite vermieden, weil die empfängerseitige Umschaltung nicht mehr von einem übertragenen Kennsignal abhängig ist, sondern aus dem Audiosignal selbst gesteuert wird. Die Schaltgröße kann eine Schaltspannung oder auch ein Schaltstrom sein.

Bei der Erfindung wird also kein Kennsignal ausgewertet, sondern das empfangene Audiosignal selbst analysiert. Bei dieser Analyse wird der Skalenfaktor des Audiosignals ausgenutzt, um festzustellen, ob auf der Senderseite eine Kompression des Audiosignals durchgeführt wurde oder nicht. Der Empfänger kann dann nach einer kurzen Auswertzeit aus dem Signal selbst die entsprechenden Maßnahmen durchführen. Wenn der Empfänger eine vorgenommene Kompression auf der Senderseite erkennt, wird er im Regelfall keine weitere Kompression oder nur noch eine geringe Kompression durchführen. Wenn der Empfänger keine Kompression auf der Sendeseite erkennt, wird er selbsttätig eine Kompression des Signals einschalten oder eine bereits vorhandene Kompression auf einen höheren Wert umschalten. Eine derartige Kompression auf der Empfängerseite ist z.B. zur Erhöhung des Störabstandes vorteilhaft, wenn das Signal noch mit einem Recorder aufgenommen werden soll. Eine derartige nachträgliche Kompression ist auch in einem Autoradio notwendig, um die Verständlichkeit und die Qualität der Tonwiedergabe sicherzustellen.

Der Skalenfaktor ist ein signaltypischer Faktor, der die Spitzenwerte von Teilbandsignalpegeln innerhalb eines bestimmten Zeitintervalls klassifiziert und für die Transcodierung jedes Teilbandsignals dessen Auflösung innerhalb des Zeitintervalls festlegt. Derartige Skalenfaktoren, ihre Bedeutung und Funktion sind näher beschrieben in der EP-PS 0 290 581.

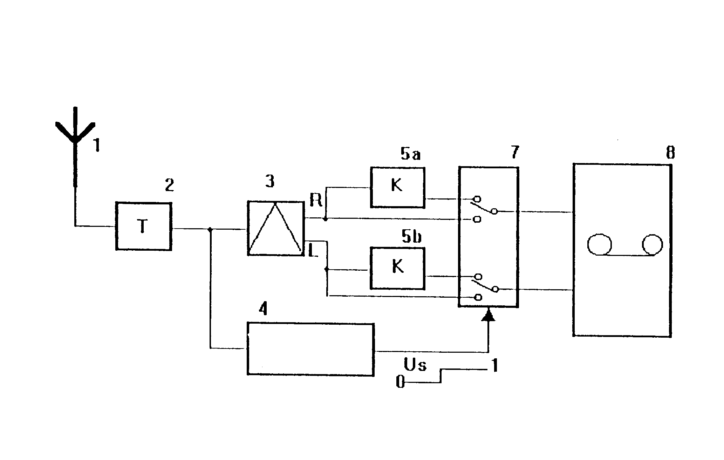

Die Erfindung wird im folgenden anhand der Zeichnung näher erläutert. Darin zeigt die Figur in vereinfachter Form das Blockschaltbild eines erfindungsgemäßen Rundfunkempfängers.

Mit der Antenne 1 wird ein stereophonisches Rundfunksignal empfangen, dessen beiden Audiosignale für den rechten und linken Tonkanal senderseitig wahlweise einer Dynamik-Kompression unterworfen sind oder nicht. Das empfangene Signal wird in dem Tuner 2 verarbeitet und dem Decoder 3 zugeführt, der die beiden Audiosignale R für den rechten Tonkanal und L für den linken Tonkanal oder auch die Signal L+R und L-R liefert. Diese Signale werden für eine Aufzeichnung dem Recorder 8 zugeführt. Wenn senderseitig im Signal noch keine Dynamik-Kompression vorgenommen wurde, ist bei der Aufzeichnung mit dem Recorder 8 eine Signal-Kompression notwendig oder vorteilhaft. Wenn senderseitig bereits eine Dynamik-Kompression durchgeführt wurde, wäre eine weitere Kompression auf der Empfängerseite überflüssig oder sogar nachteilig.

Das Signal vom Ausgang des Tuners 2 wird jetzt zusätzlich der Analysierschaltung 4 zugeführt. Die Schaltung 4 dekodiert ebenfalls das Signal und ermittelt den jeweiligen sogenannten Skalenfaktor. In Abhängigkeit von dem Skalenfaktor wird die Schaltspannung Us erzeugt, die als Schaltspannung auf den Umschalter 7 gelangt. Wenn die Analysierschaltung 4 anhand der Skalenfaktoren feststellt, daß auf der Sendeseite noch keine Kompression durchgeführt wurde, erzeugt er eine Schaltspannung mit dem Wert 0, die den Umschalter 7 in die obere Stellung legt. Dadurch werden in die Signalwege für R und L die Dynamik-Kompressoren 5a und 5b eingeschaltet. Diese bewirken eine Dynamik-Kompression der Signale R und L für die Aufzeichnung, um dadurch den Störabstand bei der Wiedergabe zu verbessern.

Wenn in der Analysierschaltung 4 anhand der Skalenfaktoren festgestellt wird, daß auf der Sendeseite bereits eine Dynamik-Kompression durchgeführt wurde, nimmt die Schaltspannung Us den Wert 1 an. Dadurch wird der Umschalter 7 in seine untere Stellung umgelegt. Die Kompressoren 5a und 5b sind dann ausgeschaltet, so daß im Empfänger in erwünschter Weise keine zusätzliche Kompression der Signale R und L durchgeführt wird. Der Skalenfaktor sowie Schaltungen zu Realisierung der Analysierschaltung 4 sind näher beschrieben in der EP-PS 0 290 581 entsprechend der DE-OS 36 39 753.

## Patentansprüche

1. Rundfunkempfänger für ein Audiosignal, das auf der Sendeseite wahlweise einer Dynamik-Kompression unterworfen ist, wobei aus dem empfangenen Audiosignal eine Schaltgröße (Us) abgeleitet wird, die entweder eine Vorrichtung zur Dynamik-Kompression (5a, 5b) des empfangenen Audiosignals einschaltet oder so umschaltet, daß die Dynamik-Kompression auf einen höheren Wert gesetzt wird, wenn festgestellt wird, daß auf der Sendeseite keine Dynamik-Kompression vorgenommen wurde, oder die Vorrichtung zur Dynamik-Kompression (5a, 5b) inaktiv schaltet oder so umschaltet, daß die Dynamik-Kompression auf einen niedrigeren Wert gesetzt wird, wenn festgestellt wird, daß bereits auf der Sendeseite eine Dynamik-Kompression vorgenommen wurde,**dadurch gekennzeichnet**, daß der Rundfunkempfänger eine Auswerteeinheit (4) zur Auswertung von Skalenfaktoren des empfangenen Audiosignals aufweist und anhand der Auswertung der Skalenfaktoren feststellt, ob die übertragenen Audiosignale senderseitig komprimiert oder nicht-komprimiert sind um so die dementsprechende Schaltgröße (Us) zu liefern.

2. Rundfunkempfänger nach Anspruch 1, wobei er einen Decoder zur Decodierung von digital kodierten Audiosignalen, aufweist, wobei das empfangene Audiosignal durch eine Vielzahl spektraler Teilbandsignale digital dargestellt ist und für jedes Teilbandsignal zeitdiskrete, quantisierte Abtastwerte vorliegen und der Skalenfaktor jeweils für jedes digitalisierte Teilbandsignal bestimmt ist, welcher den Spitzenwert des Teilbandsignalpegels innerhalb eines bestimmten Zeitintervalls klassiert und wobei der übertragene Skalenfaktor bei der Decodierung des empfangenen kodierten Teilbandsignals empfangsseitig zur Rekonstruktion des ursprünglichen Teilbandsignals dient.

## Claims

1. Broadcast receiver for an audio signal which is optionally subjected to dynamic compression at the transmitting end, a switching variable (Us) being derived from the received audio signal, which variable either switches on an apparatus for a dynamic compression (5a, 5b) of the received audio signal or changes over said apparatus in such a way that the dynamic compression is set to a higher value if it is determined that no dynamic compression was carried out at the transmitting end or switches the apparatus for dynamic compression (5a, 5b) into an inactive status or switches it over in such a way that the dynamic compression is set to a lower value if it is determined that a dynamic compression was already carried out at the transmitting end,
characterized in that
the broadcast receiver includes an analysing circuit (4) for evaluating scale factors of the received audio signal and determines by means of the evaluation of the scale factors whether the transmitter audio signals are compressed or not-compressed at the transmitting end in order to provide in this way the corresponding switching variable (Us).

2. Broadcast receiver according to claim 1, comprising a decoder for decoding digitally coded audio signals, the received audio signal being digitally represented by a multiplicity of spectral sub-band signals and time-discrete quantized sample values being present for each sub-band signal and the scale factor being determined for each digitized sub-band signal, which factor classifies the peak value for the sub-band signal level within a particular time interval and the transmitted scale factor is used during the decoding of the received coded sub-band signal at the receiver end for reconstructing the original sub-band signal.

## Revendications

1. Récepteur de radiodiffusion d'un signal audio soumis du côté émetteur à une compression sonore, où une valeur de commutation (Us), dérivée du signal audio reçu, connecte un dispositif de compression sonore (5a, 5b) ou commute celui-ci de manière à ce que la compression sonore soit déterminée sur une valeur supérieure, lorsqu'il a été défini qu'aucune compression sonore n'a été réalisée côté émetteur ou bien connecte de façon inactive le dispositif de compression sonore (5a, 5b) ou commute celui-ci de manière à ce que la compression sonore soit déterminée à une valeur inférieure, lorsqu'il a été défini qu'une compression sonore a déjà été réalisée côté émetteur, **caractérisé en ce que** le récepteur de radiodiffusion présente une unité de lecture (4) permettant d'analyser les facteurs de cadrage du signal audio reçu et détermine, grâce à l'analyse des facteurs de cadrage, si les signaux audio transmis sont comprimés ou non côté émetteur afin de délivrer la valeur de commutation (Us) conforme.

2. Récepteur de radiodiffusion conforme à la revendication 1, **caractérisé en ce qu**'il présente un décodeur permettant de décoder des signaux numériquement codés, où le signal audio reçu est représenté numériquement par un grand nombre de signaux de sous-bandes spectraux, où des valeurs de balayage quantifiées, à valeurs discrètes en temps, existent pour chaque signal de sous-bande et le facteur de cadrage, qui classe la valeur maximale du niveau de signal de sous-bande dans un intervalle de temps donné, est déterminé pour chaque signal de sous-bande numérisé et où le facteur de cadrage transmis sert à la reconstruction du signal de sous-bande d'origine, lors du décodage côté récepteur du signal de sous-bande codé reçu.
